# EUROPEAN PATENT SPECIFICATION

(11) **EP 1 690 392 B1**
(45) Date of publication and mention of the grant of the patent: **26.08.2015**
(21) Application number: 04811649.5
(22) Date of filing: 22.11.2004
(51) Int. Cl.: H04W 36/12, H04W 8/20, H04W 60/00, H04W 92/24

(54) **MOBILE STATION REGISTRATION IN A CELLULAR COMMUNICATION SYSTEM**
MOBILSTATIONS-REGISTRATION IN EINEM ZELLULAREN KOMMUNIKATIONSSYSTEM
ENREGISTREMENT DE STATION MOBILE DANS UN SYSTÈME DE TÉLÉCOMMUNICATION CELLULAIRE

(30) Priority: 25.11.2003 US 721668
(43) Date of publication of application: 16.08.2006
(73) Proprietor: Motorola Mobility LLC, Libertyville, IL 60048 (US)
(72) Inventor: SPEAR, Stephen, L., Skokie, Illinois 60203 (US); PECEN, Mark, E., Palatine, Illinois 60067 (US); SMOLINSKE, Jeffrey, C., Schaumburg, Illinois 60173 (US); WILLIS, Lawrence, A., McHenry, Illinois 60050 (US)
(74) Representative: Openshaw, Paul Malcolm
(86) International application number: PCT/US2004/038960
(87) International publication number: WO 2005/053256

(56) References cited:
- WO-A-00/79808
- US-A1- 2002 068 565
- US-A1- 2002 131 386
- US-A1- 2003 016 655
- US-B1- 6 463 055
- "3rd Generation Partnership Project; Technical Specification Group GSM EDGE Radio Access Network; General Packet Radio Service (GPRS); Mobile Station (MS) - Base Station System (BSS) interface; Radio Link Control/ Medium Access Control (RLC/MAC) protocol (Release 4)", 1 January 2001 (2001-01-01), 3GPP STANDARD; 3GPP TS 44.060, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, PAGE(S) 1 - 315, XP050378650,
- "3rd Generation Partnership Project; Technical Specification Group Core Network; Numbering, addressing and identification (Release 1999)", 1 September 2003 (2003-09-01), 3GPP STANDARD; 3GPP TS 23.003, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, PAGE(S) 1 - 33, XP050361707,

## Description

### Field of the Invention

The present invention relates generally to cellular communication systems, and, in particular, to mobile station registration in a cellular communication system.

### Background of the Invention

The General Packet Radio Service (GPRS) standard provides a compatibility standard for cellular mobile telecommunications systems. The GPRS standard ensures that a mobile station (MS) operating in a GPRS system can obtain communication services when operating in a system manufactured according to the standard. To ensure compatibility, radio system parameters and call processing procedures are specified by the standard, including call processing steps that are executed by an MS and a base station subsystem serving the MS in order to provide for cell reselection.

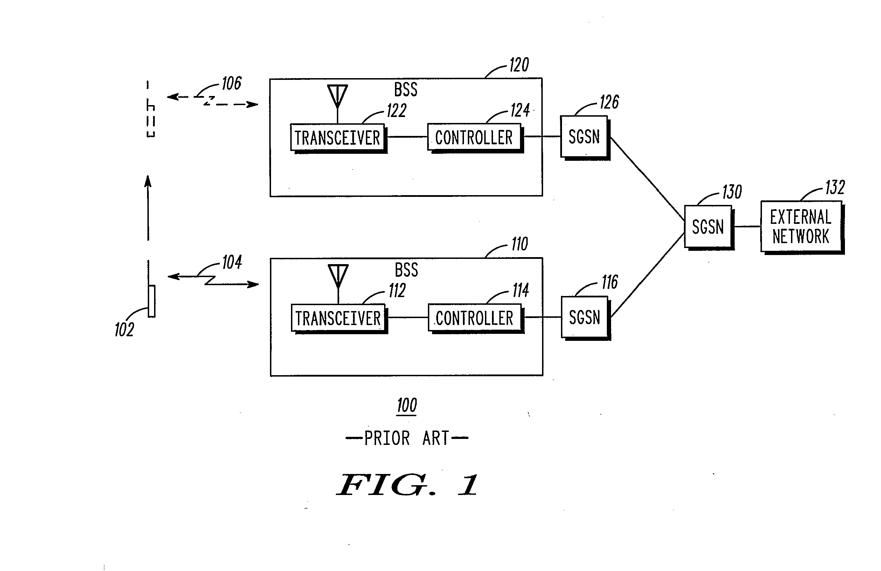

FIG. 1 is a block diagram of an exemplary GPRS communication system 100 of the prior art. Communication system 100 includes multiple Base Station Systems (BSSs) 110, 120. Each BSS 110, 120 includes a respective transceiver 112, 122 that is coupled to a respective controller 114, 124. Each BSS 110, 120 is coupled to a respective Serving GPRS Support Node (SGSN) 116, 126. In turn, each SGSN 116, 126 is further coupled to a Gateway GPRS Support Node (GGSN) 130 and, via the GGSN, to an external network 132. BSSs 110, 120, SGSNs 116, 126, and GGSN 130 are collectively referred to as an infrastructure of communication system 100. Communication system 100 further includes an MS 102 that resides in a first Routing Area (RA) and is provided communication services by a serving, or source, BSS 110 and a serving, or source, SGSN 116 serving the first RA. Typically, data is transferred between MS 102 and the serving BSS 110 over an air interface, or wireless communication link, 104 that includes a forward link and a reverse link.

As MS 102 moves around in communication system 100, the MS may experience deterioration in radio frequency (RF) signal conditions or congestion conditions with respect to the communication services provided to the MS by BSS 110. As a result, the MS 102 may decide to perform a cell reselection. In GPRS communication systems, such as communication system 100, the burden of cell selection is imposed on the MS. That is, in a GPRS communication system, the MS initiates a cell reselection and selects a target cell. During cell reselection, the MS may decide to abandon a serving RA, that is, the RA serviced by BSS 110 and SGSN 116, and to move to a neighboring, or target, RA, such as an RA serviced by BSS 120 and SGSN 126. In the current implementation of a GPRS system such as system 100, when MS 102 switches RAs, that is, is handed over from the source RA to the target RA, the MS establishes a wireless communication link 106 with the target BSS 120 serving the target RA and terminates the communication link 104 with the source RA. Upon establishing communication link 106, MS 102 must then register with the target SGSN 126 servicing the target RA.

Upon establishing communication link 106 with BSS 120, MS 102 ceases listening to the forward link associated with source BSS 110. As a result, MS 102 does not receive any data packets that may be conveyed by source BSS 110 to MS 102 subsequent to the MS establishing communication link 106 with target BSS 120. Any such data packets must be reconveyed to SGSN 126 and then conveyed by SGSN 126 to MS 102 via BSS 120. However, MS 102 must first register with SGSN 126 before the SGSN conveys any data packets to the MS. As a result, all data flows are put on hold while MS 102 registers with the new SGSN 126, which registration process may take several seconds. Initially, GPRS did not support real-time services and a data flow disruption of several seconds during cell reselection was not an important issue. However, as real-time services are added to GPRS communication systems, the need has arisen for minimizing the disruption to data flows during a cell reselection involving a switch of RAs.

WO 00/79808 A discloses a method of improving cell change procedures within a General Packet Radio Service (GPRS) network to reduce the handover interruption time while keeping the delays to affordable values for real-time payload services. The data stream interruption is reduced at the air interface level and the core network level. Improvements at the air interface are achieved by reducing the system information retrieval time and pre-allocating the radio resources prior to the MS accessing the new cell. Improvements within the core network are achieved by shortening the inter-SGSN Routing Area Update interruption interval and implementing low latency delay-sensitize requirements and shaping packet traffic for premium traffic

US 2003/016655 A discloses a method applicable to third generation, wireless, mobile access IP-based data networks supporting IETF proposed Mobile IP support standards. The method is said to reduce the end-to-end packet latency, jitter and packet loss that occur when the communication link between a mobile node and the network is handed-off from one local agent or router to another. The method is said to greatly reduce the time necessary to establish a new network data route between the mobile node and a correspondent node during the hand-off from one agent/router to another by predicting the mobility of the mobile node, predetermining when the hand-off will occur, and establishing the new data route in advance of the hand-off.

Therefore, a need exists for a method and apparatus that reduces a length of time that data flows are disrupted during a cell reselection involving a switch of RAs in a GPRS communication system.

### Brief Description of the Drawings

FIG. 1 is a block diagram of a wireless communication system of the prior art.
FIG. 2 is a block diagram of a wireless communication system in accordance with an embodiment of the present invention.
FIG. 3 is a logic flow diagram of a process by which a mobile station of FIG. 2 pre-registers with a potential target Serving GPRS Support Node (SGSN) of FIG. 2 in accordance with an embodiment of the present invention.
FIG. 4 is a block diagram of an exemplary, modified System Information message in accordance with an embodiment of the present invention.
FIG. 5 is a logic flow diagram of a mobile station-initiated pre-registration process in accordance with various embodiments of the present invention.
FIG. 6A is a logic flow diagram of an infrastructure-initiated pre-registration process in accordance with various embodiments of the present invention.
FIG. 6B is a continuation of the logic flow diagram of FIG. 6A depicting an infrastructure-initiated pre-registration process in accordance with various embodiments of the present invention.

### Detailed Description of the Invention

To address the need for a method and apparatus that reduces a length of time that data flows are disrupted during a cell reselection involving a switch of Routing Areas (RAs) in a General Packet Radio Service (GPRS) communication system, a communication system provides for a mobile station (MS) to pre-register with a Serving GPRS Support Node (SGSN) servicing a neighboring Routing Area (RA) that is a handoff candidate. In pre-registering with the neighboring RA and SGSN, the MS at least partially registers with the RA and SGSN, that is, at least a portion of the MS's registration information is conveyed to the neighboring SGSN serving the neighboring RA, prior to the MS being served by an associated neighboring BSS 230, for example, prior to an initiation of a handoff of the MS to neighboring BSS 230. By pre-registering with the candidate SGSN, the duration of a registration process and the corresponding service disruptions when the MS is handed off to such an SGSN are reduced.

Generally, an embodiment of the present invention encompasses a method for registering a mobile station, wherein the method comprises registering the mobile station with a first Serving GPRS Support Node, wherein the first Serving GPRS Support Node services a first Base Station System that provides communication services to the mobile station and wherein the method further comprises: assembling a Neighbor List that comprises a plurality of communication channels, wherein a communication channel of the plurality of communication channels is associated with a second Base Station System that is serviced by a second Serving GPRS Support Node that is different than the first Serving GPRS Support Node and wherein the Neighbor List informs of a Routing Area RA associated with each communication channel of the plurality of communication channels; determining the second BSS that is serviced by the second Serving GPRS Support Node and that is different than the first Serving GPRS Support Node based on the Routing Area associated with each communication channel of the plurality of communication channels included in the Neighbor List; and partially registering the mobile station with the second Serving GPRS Support Node based on the determined second BSS and prior to the establishment of a control channel between the mobile station and the second Base Station System.

Another embodiment of the present invention encompasses an apparatus for pre-registering a mobile station, the apparatus comprising a first Serving GPRS Support Node having a processor that is adapted to assemble a Neighbor List corresponding to a mobile station and comprising a plurality of communication channels, wherein the Neighbor List comprises a Routing Area associated with each communication channel of the plurality of communication channels and is adapted to, while currently serving the mobile station, partially register the mobile station with a second Serving GPRS Support Node based on the Routing Area associated with each communication channel of the plurality of communication channels included in the Neighbor List and prior to the establishment of a control channel between the mobile station and a Base Station System associated with the second Serving GPRS Support Node.

Still another embodiment of the present invention encompasses a mobile station comprising: at least one memory device; and a processor operably coupled to the memory device that is adapted to, when the mobile station is registered with a first Serving GPRS Support Node, wherein the first Serving GPRS Support Node services a first Base Station System that provides communication services to the mobile station, receive a Neighbor List comprising a plurality of communication channels and a Routing Area associated with each communication channel of the plurality of communication channels, wherein a communication channel of the plurality of communication channels is associated with a second Base Station System that is serviced by a second Serving GPRS Support Node that is different than the first Serving GPRS Support Node, is adapted to store the Neighbor List in the at least one memory device, is adapted to determine the second Base Station System based on the Routing Area, and is adapted to initiate a registration of the mobile station by conveying to an infrastructure a request to register the mobile station with the second Serving GPRS Support Node based on the determined second Base Station System and prior to the establishment of a control channel between the mobile station and the second Base Station System.

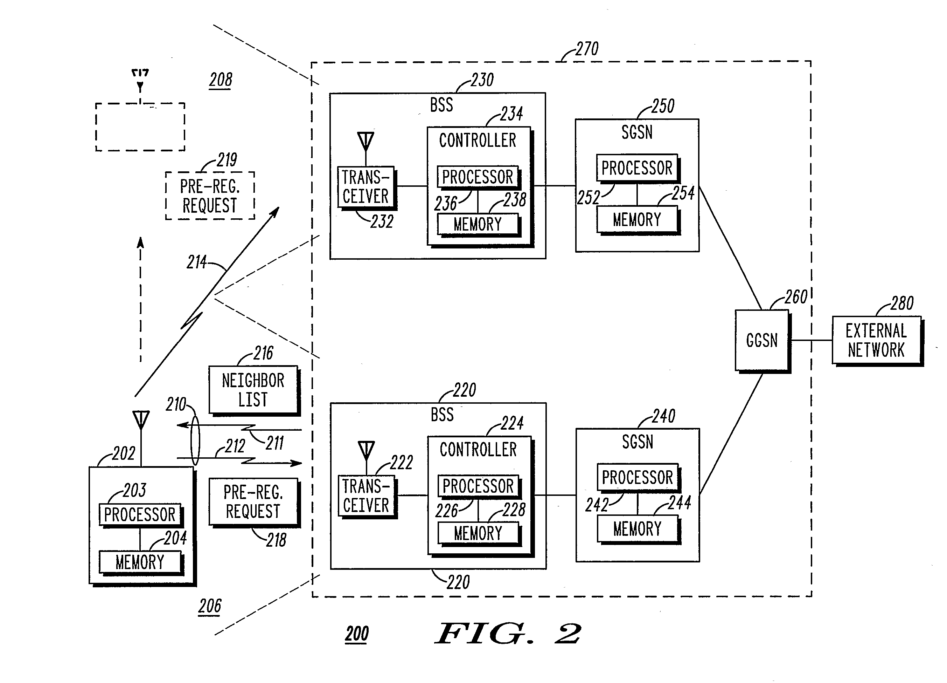

The present invention may be more fully described with reference to FIGs. 2-6B. FIG. 2 is a block diagram of a wireless communication system 200 in accordance with an embodiment of the present invention. Communication system 200 includes multiple Base Station Systems (BSSs) 220, 230 (two shown). Each BSS 220, 230, includes a respective at least one transceiver 222, 232, such as a Base Transceiver Station (BTS), that is operably coupled to a respective controller 224, 234. As is known in the art, each BSS 220, 230 may include elements such as a Base Station Controller (BSC), and a Packet Control Unit (PCU) or a Packet Control Function (PCF). When a BSS, such as BSS 220 or 230, includes such elements, controller 224 may be implemented in any one of such elements or may be distributed among such elements. Each BSS 220, 230 is coupled to a respective Serving GPRS Support Node (SGSN) 240, 250 by an interface, for example by a Gb interface or an Iu-ps interface, that includes a bearer path and a signaling interface. In turn, each SGSN 240, 250 is further coupled to a Gateway GPRS Support Node (GGSN) 260 and, via the GGSN, to an external network 280. BSSs 220, 230, SGSNs 240, 250, and GGSN 260 are collectively referred to as an infrastructure 270 of communication system 200.

Each SGSN 240, 250 provides communication services via an associated BSS 220, 230 to a respective Routing Area (RA) 206, 208. Communication system 200 further includes an MS 202 that resides in a first Routing Area (RA) 206 serviced by a first serving, or source, BSS 220 and a first serving, or source, SGSN 240. Data is transferred between MS 202 and serving BSS 220 via an air interface 210 that includes a forward link 211 and a reverse link 212. Forward link 211 comprises multiple communication channels including at least one broadcast channel, at least one traffic channel, and at least one control channel. Reverse link 212 also comprises multiple communication channels, including an access channel, at least one traffic channel, and at least one control channel.

Each of MS 202, controllers 224, 234 and SGSNs 240, 250 includes a respective processor 203, 226, 236, 242, 252 operably coupled to, or associated with, a respective at least one memory device 204, 228, 238, 244, 254. Each of processors 203, 226, 236, 242, and 252 comprises one or more microprocessors, microcontrollers, digital signal processors (DSPs), combinations thereof or such other devices known to those having ordinary skill in the art. Each of the at least one memory devices 204, 228, 238, 244, and 254 comprises at least one memory device such as a random access memory (RAM), a dynamic random access memory (DRAM), and/or a read only memory (ROM) or equivalents thereof, that maintains data and programs that may be executed by the corresponding processor. In addition, each of the at least one memory devices 244 and 254 of respective SGSNs 240 and 250 may further maintain a list of BSSs, such as BSSs 220 and 230, operating in communication system 200 in association with an SGSN, that is, SGSNs 240 and 250, servicing each BSS. Furthermore, each of the at least one memory devices 228 and 238 of respective controllers 224 and 234 and/or each of the at least one memory devices 244 and 254 of respective SGSNs 240 and 250 may further maintain a record of a geographical location of each BSS 220, 230 in communication system 200.

Communication system 200 comprises a wireless packet data communication system. In order for MS 202 to establish a packet data connection with an external network such as external network 280, each of MS 202 and multiple BSSs 220, 230, multiple SGSNs 240, 250, and GGSN 260 operates in accordance with the General Packet Radio Service (GPRS) standard, and in particular with 3GPP (Third Generation Partnership Project) TS (Technical Specification) 23.060 v5.0.0, 3GPP TS 44.060 v4.4.0, 3GPP TS 45.008 v5.4.0, 3GPP TS 04.18 v8.12.0, which standards are hereby incorporated by reference herein and copies of which may be obtained from the 3GPP via the Internet or from the 3GPP Organization Partners' Publications Offices at Mobile Competence Centre 650, route des Lucioles, 06921 Sophia-Antipolis Cedex, France. The GPRS standard specifies wireless telecommunications system operating protocols, including radio system parameters and call processing and handoff procedures, for GPRS communication systems. By operating in accordance with the GPRS standard, a user of MS 202 can be assured that MS 202 will be able to communicate with infrastructure 270 and establish a packet data communication link with an external network, such as network 280, via infrastructure 270. In communication system 200, a communication channel comprises one or more time slots of multiple time slots transmitted in a frequency bandwidth. However, those who are of ordinary skill in the art realize that communication system 200 may operate in accordance with any one of a variety of wireless packet data communication systems, such as a Global System for Mobile Communication (GSM) communication system, a Time Division Multiple Access (TDMA) communication system, a Code Division Multiple Access (CDMA) communication system, or an Orthogonal Frequency Division Multiple Access (OFDM) communication system.

Each controller 224, 234 maintains a record, in an associated at least one memory device 228, 238, of each MS that is active in communication system 200 and is serviced by the controller. Preferably, the controller maintains the records of active MSs by storing an MS identifier (MS ID) uniquely associated with each such MS in an associated at least one memory device 228, 238. For example, when MS 202 initiates a packet data session, the MS conveys a request for a channel assignment, preferably a Channel Request message, to a BSS servicing the MS, that is, BSS 220. The channel assignment request is received by BSS 220, and in particular transceiver 222, and forwarded to controller 224. In response receiving the request, controller 224 assigns to MS 202 one or more communication channels, including a traffic channel, in air interface 210 at transceiver 222 and conveys to transceiver 222 an Uplink Immediate Assignment (ULIA) message informing of the one or more assigned communication channels. Transceiver 222 then forwards the ULIA message to MS 202. Channel Request messages and ULIA messages are well known in the art and will not be described in detail herein. Upon receiving the ULIA message from BSS 220, MS 202 conveys a message including uplink data (UL Data) and an MS identifier (MS ID) uniquely associated with the MS, such as a Temporarily Logical Link Identifier (TLLI), to serving BSS 220. BSS 220 stores the received MS ID in the least one memory device 228 and forwards the message to associated serving SGSN 240.

Upon receiving the message, SGSN 240 stores the received MS ID in the at least one memory device 244 of the SGSN. SGSN 240 further establishes communication links between the SGSN and GGSN 260 for conveyance of data and other messages to and from MS 202, such as GPRS Tunneling Protocol (GTP) tunnels and flow identifiers for Packet Data Protocol (PDP) contexts. In addition, serving BSS 220 assembles and maintains, in the at least one memory device 244 and in association with MS 202, a Neighbor List 216 comprising communication channels associated with BSSs, such as BSS 230, that are potential handoff candidates for MS 202. In another embodiment of the present invention, Neighbor List 216 may be assembled by serving SGSN 240. BSS 220 or SGSN 240, whichever is appropriate, then conveys the assembled Neighbor List to MS 202. Upon receiving Neighbor List 216, MS 202 monitors one or more of the communication channels included in the Neighbor List.

As MS 202 moves around in communication system 200, the MS may experience deterioration in radio frequency (RF) signal conditions or congestion conditions with respect to the communication services provided to the MS by serving BSS 220. Alternatively, MS 202 may be informed of a preferred cell reselection candidate, such as a neighboring cell in target RA 208 and/or an associated neighboring BSS 230, by infrastructure 270. As a result, the MS 202 may decide to perform a cell reselection. During cell reselection, MS 202 may decide to abandon a first, source RA, that is, RA 206, and to move to a neighboring, target RA, such as a second RA 208 serviced by a second BSS 230 and a second SGSN 250.

In a prior art communication system such as communication system 100, when an MS is handed off from a first, source RA to a second, neighboring RA, and in particular from a first, source SGSN to a second, target SGSN, the MS must re-register in the second, neighboring RA, that is, with the second, target SGSN. The re-registration may cause a disruption in the data flow of several seconds and as many as seven to eight seconds, which disruption is unacceptable for real time services such as voice services. As a result, communication system 200 provides for an MS, such as MS 202, to pre-register with an SGSN, such as SGSN 250, servicing a neighboring RA, that is, RA 208, that is a handoff candidate. In pre-registering in a neighboring RA 208 with SGSN 250, the MS at least partially registers with the SGSN, that is, at least a portion of the MS's registration information is conveyed to the neighboring SGSN serving the neighboring RA, prior to the MS being served by an associated neighboring BSS 230, for example, prior to an initiation of a handoff of the MS to neighboring BSS 230. By pre-registering with a potential target SGSN, the duration of a registration process and the corresponding service disruptions when the MS is handed off to such an SGSN are reduced.

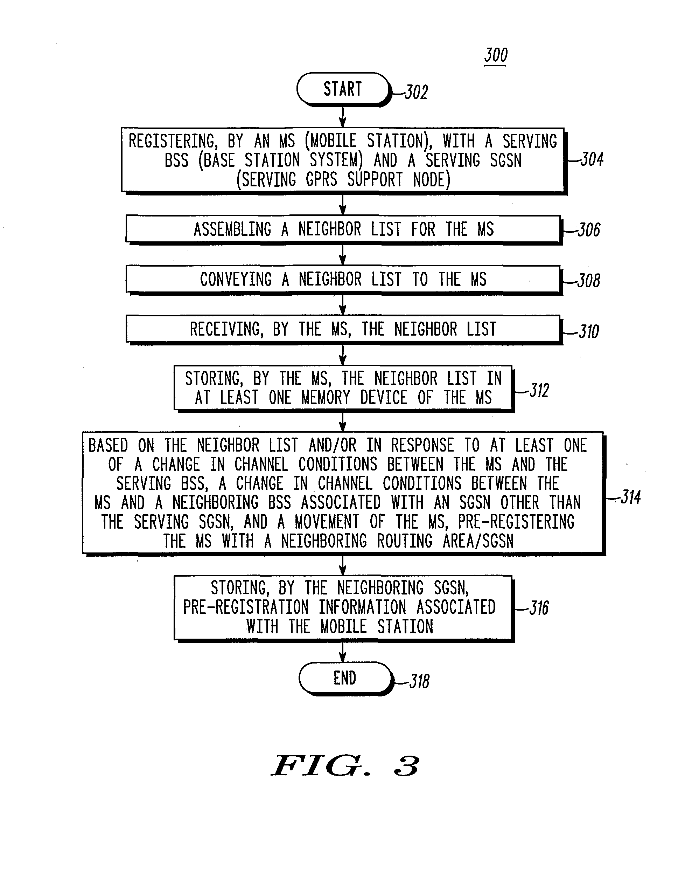

FIG. 3 is a logic flow diagram 300 of a process whereby an MS in communication system 200, such as MS 202, pre-registers in a potential target RA, and in particular with a potential target SGSN, such as SGSN 250, in accordance with an embodiment of the present invention. Logic flow diagram 300 begins (302) when an MS, such as MS 202, initially registers (304) with a serving BSS and a serving SGSN, that is, BSS 220 and SGSN 240. As part of the registration process, serving BSS 220, and in particular controller 224 of serving BSS 220, assembles (306) Neighbor List 216 and conveys (308) the assembled Neighbor List to MS 202. In another embodiment of the present invention, Neighbor List 216 may be assembled by serving SGSN 240 and conveyed by the SGSN to MS 202. Unless otherwise specified herein, all functions performed herein by MS 202, controller 224, controller 234, SGSN 240, or SGSN 250 are respectively performed by processor 203, 226, 236, 242, and 252. Furthermore, unless otherwise specified herein, all functions performed herein by BSS 220 or BSS 230 are respectively performed by controllers 224 and 234, and specifically by processors 226 and 236 of controllers 224 and 234.

In one embodiment of the present invention, Neighbor List 216 may be a typical Neighbor List of the prior art, comprising a list of broadcast channels (BCCH) associated with each of multiple neighboring BSSs, such as a broadcast channel associated with BSS 230. In such an embodiment of the present invention, each BSS of the multiple neighboring BSSs broadcasts information concerning an RA and or SGSN associated with the BSS via the associated broadcast channel. In response to receiving Neighbor List 216, MS 202 monitors the listed broadcast channels and receives the RA and/or SGSN information from each BSS included in the Neighbor List.

In another embodiment of the present invention, Neighbor List 216, in addition to including a list of broadcast channels (BCCH) associated with each of multiple neighboring BSSs, further includes, in association with each broadcast channel listed in the Neighbor List, an indicator of an RA or SGSN associated with the corresponding BSS. For example, in one embodiment of the present invention, Neighbor List 216 may include a single bit that indicates whether the BSS is a member of a same RA 206 as the first, serving or source, BSS 220. That is, from another perspective, Neighbor List 216 may indicate, for each listed broadcast channel, whether the corresponding BSS is serviced by a same SGSN as the SGSN 240 servicing the serving BSS 220. For example, Neighbor List 216 may include, in association with each listed broadcast channel, an RA membership data field. When the corresponding BSS is included in a same RA as source BSS 220, that is, is serviced by a same SGSN 240 as source BSS 220, then serving SGSN 240 may embed a value of '1' in the RA membership data field. When the corresponding BSS is included in an RA, such as RA 208 with respect to BSS 230 and SGSN 250, different from the RA serviced by source BSS 220 and source SGSN 240, then serving SGSN 240 may embed a value of '0' in the RA membership data field.

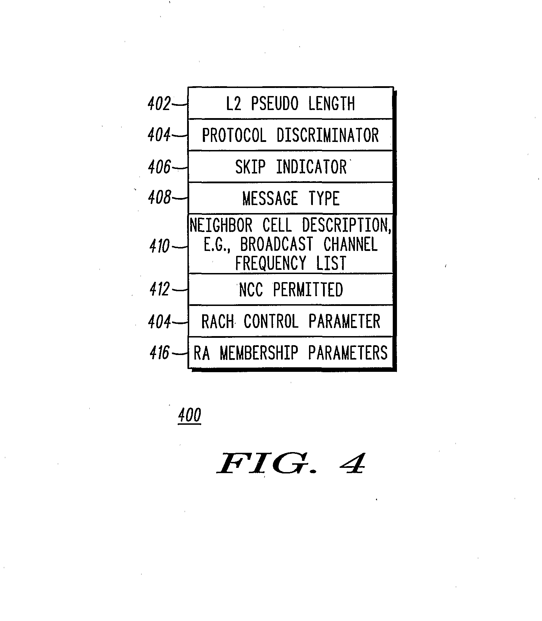

For example, Neighbor List 216 may be conveyed to MS 202 via a modified version of a System Information (SI) message, such as a modified SI 2, SI2bis, SI5, or an SI5bis message. In order to provide an indicator of an RA or SGSN associated with each BSS in the Neighbor List, infrastructure 270 may modify the SI message to include the RA or SGSN indicator. An example of such a modified SI message is depicted in FIG. 4. As shown in FIG. 4, an exemplary, modified SI message 400 may include a Layer 2 Pseudo Length data field 402, a Protocol Discriminator data field 404, a Skip Indicator data field 406, a Message Type data field 408, a Neighbor Cell Description data field 410 that informs of multiple neighbor cells and associated BSSs, such as a list of broadcast frequencies of each of multiple neighboring BSSs, a Network Colour Code (NCC) Permitted data field 412, and a Random Access Channel (RACH) Parameters data field 414. Such data fields are typical of an SI message. However, unlike a typical SI message, SI message 400 further includes an RA Membership data field 416 informing of an RA/SGSN associated with, or not associated with, each of the multiple neighbor cells and associated BSSs. SGSN 240 may then embed the RA/SGSN indicators in data field 416.

In another embodiment of the present invention, instead of an indicator indicating a 'same' or 'different' RA or SGSN, each indicator may comprise an identifier associated with the RA in which the corresponding BSS located or an identifier associated with the SGSN servicing the corresponding BSS. For example, the identifier may comprise a code that is uniquely associated with the RA or may comprise an identifier, such as a routing address such as an Internet Protocol (IP) address, that is uniquely associated with the SGSN. However, an advantage of using an indicator comprising a single bit is that a mere 16 bits, or two octets, are consumed in indicating an RA, or SGSN, associated with each of 16 broadcast channels typically included in a Neighbor List.

Referring again to FIG. 3, in response to receiving (310) Neighbor List 216, MS 202 stores (312) the received Neighbor List in the at least one memory device 204 of the MS. Based on Neighbor List 216 and/or in response to at least one of a change in channel conditions between MS 202 and BSS 220, a change in channel conditions between MS 202 and a neighboring BSS associated with an SGSN other than serving SGSN 240, such as BSS 230 and SGSN 250, and a movement of MS 202, MS 202 then pre-registers (314) in at least one RA, such as RA 208, and with an associated SGSN, that is, SGSN 250, that is associated with a BSS 230 corresponding to a channel in the Neighbor List and that is different than the RA 206/SGSN 240 associated with serving BSS 220. In pre-registering with a neighboring RA 208/SGSN 250, MS 202 at least partially registers with such an RA/SGSN prior to MS 202 being served by the associated neighboring BSS 230. In pre-registering MS 202 with neighboring RA 208/SGSN 250, at least a portion of the registration information associated with the MS is conveyed to, and received by, neighboring SGSN 250. In response to receiving the registration information, SGSN 250 stores (316) the registration information in the at least one memory device 254 of the SGSN and logic flow 300 then ends (318).

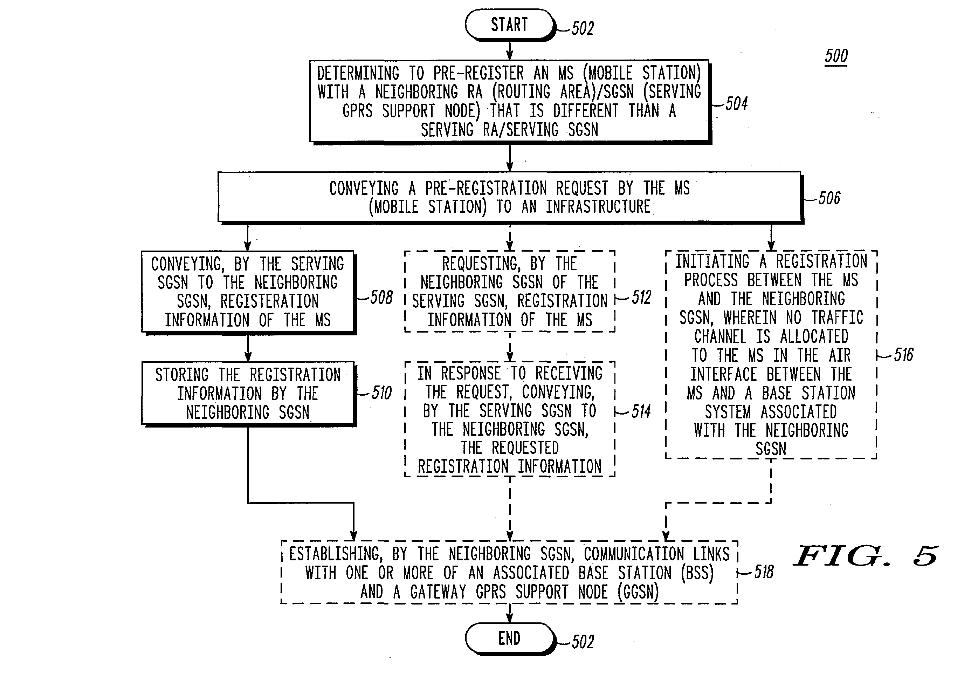

In one embodiment of the present invention, the step of pre-registering (314) with RA 208/SGSN 250 may be initiated by MS 202. FIG. 5 is a logic flow diagram 500 depicting an MS-initiated pre-registration in accordance with various embodiments of the present invention. Logic flow diagram 500 begins (502) when MS 202 determines (504) to pre-register with a neighbor SGSN, that is, SGSN 250. In one embodiment of the present invention, step 504 may comprise the following steps. In response to receiving Neighbor List 216, MS 202 determines whether any neighbor BSS, that is, a BSS associated with a communication channel in the Neighbor List, is further associated with an RA or SGSN different than the RA 206 or SGSN 240 associated with serving BSS 220. In response to determining that a BSS, such as BSS 230, associated with a communication channel in the Neighbor List is further associated with a neighbor RA or SGSN, such as RA 208 and SGSN 250, different than the serving RA 206 or serving SGSN 240, MS 202 determines to pre-register with the neighbor RA or SGSN.

In another embodiment of the present invention, step 504 may comprise the following steps. In response to receiving Neighbor List 216, MS 202 may monitor each broadcast channel identified in the Neighbor List. MS 202 determines a signal quality metric, such as a signal strength, a signal-to-noise ratio (SNR), or a bit error rate (BER), with respect to each monitored channel and compares each determined signal quality metric to a pre-registration signal quality metric threshold that is maintained in the at least one memory device 204 of the MS. When a determined signal quality metric compares favorably with the pre-registration signal quality metric threshold, for example, exceeds a signal strength threshold or a SNR threshold, then MS 202 determines to pre-register with a neighbor SGSN associated with the monitored broadcast channel and an associated BSS. MS 202 may further determine that the neighbor RA/SGSN is different than the serving RA/SGSN, or the serving SGSN, that is, SGSN 240, may determine that the neighbor RA/SGSN associated with the neighbor BSS is different than the serving RA/SGSN.

In response to determining to pre-register with a neighbor SGSN, that is, SGSN 250, MS 202 conveys (506) a pre-registration request to infrastructure 270. In one embodiment of the present invention, MS 202 may convey a pre-registration request to infrastructure 270 by conveying a first pre-registration request 218 to BSS 220 via the at least one control channel in reverse link 212, and via BSS 220 to serving SGSN 240. First pre-registration request 218 requests that infrastructure 270 pre-register MS 202 with neighbor SGSN 250. Pre-registration request 218 may specifically identify the neighbor SGSN, that is, SGSN 250, or an RA, that is, RA 208, associated with the neighbor BSS 230 and neighbor SGSN, or serving SGSN 240 may determine the neighbor SGSN by retrieving Neighbor List information stored in the at least one memory device 244 of the serving SGSN in response to receiving the pre-registration request.

In response to receiving pre-registration request 218, serving SGSN 240 conveys (508) registration information associated with MS 202 to the neighbor SGSN, that is, SGSN 250. In one embodiment of the present invention, serving SGSN 240 may convey to SGSN 250 at least a portion of the registration information associated with MS 202 and maintained by the serving SGSN in the at least one memory device 244. In another embodiment of the present invention, pre-registration request 218 may further include registration information intended for SGSN 250. In response to receiving pre-registration request 218, serving SGSN 240 forwards the received registration information to SGSN 250. In yet another embodiment of the present invention, in response to receiving pre-registration request 218, serving SGSN may request registration information from MS 202, for example, by conveying a registration request to MS 202. In response to receiving the registration request, MS 202 may convey registration information to SGSN 240, which registration information is forwarded by SGSN 240 to SGSN 250. Serving SGSN 240 may convey the registration information to SGSN 250 via GGSN 260 or, in response to receiving pre-registration request 218, may establish a point-to-point communication with SGSN 250 and convey the information via the established point-to-point communication. In response to receiving the registration information from SGSN 240, SGSN 250 stores (510) the registration information in the at least one memory device 254 of the SGSN. In addition, in response to receiving registration information for MS 202 from SGSN 240, SGSN 250 may also establish (518) communication links with BSS 230 and/or GGSN 260 for transmission of data to and from MS 202. Logic flow 500 then ends (520).

In another embodiment of the present invention, instead of conveying first pre-registration request 218 to serving BSS 20, MS 202 may convey a second pre-registration request 219 to neighbor BSS 230 via a control channel in a reverse link 214 between the MS and BSS 230, and via BSS 230 to SGSN 250. Second pre-registration request 219 requests that BSS 230 and associated SGSN 250 pre-register MS 202. In one embodiment of the present invention, second pre-registration request 219 may identify serving SGSN 240. In response to receiving pre-registration request 219, SGSN 250 may request (512), from serving SGSN 240, at least a portion of registration information associated with MS 202. The request maybe conveyed by SGSN 250 to SGSN 240 via GGSN 260 or via a communication link established between SGSN 250 and SGSN 240. In response to receiving the request for at least a portion of the registration information, SGSN 240 then conveys (514) the requested information to SGSN 250 and SGSN 250 stores the received registration information in the at least one memory device 254. In another embodiment of the present invention, second pre-registration request 219 may not identify SGSN 240. In such an embodiment of the present invention, in response to receiving the second pre-registration request, SGSN 250 may initiate (516) a pre-registration process with MS 202 that comprises steps of a typical registration process involving an exchange of registration information between MS 202 and SGSN 250. In yet another embodiment of the present invention, pre-registration request 219 may further include registration information associated with MS 202. In response to receiving pre-registration request 219, serving SGSN 250 stores the received registration information in the at least one memory device 254. Logic flow 500 then ends (520).

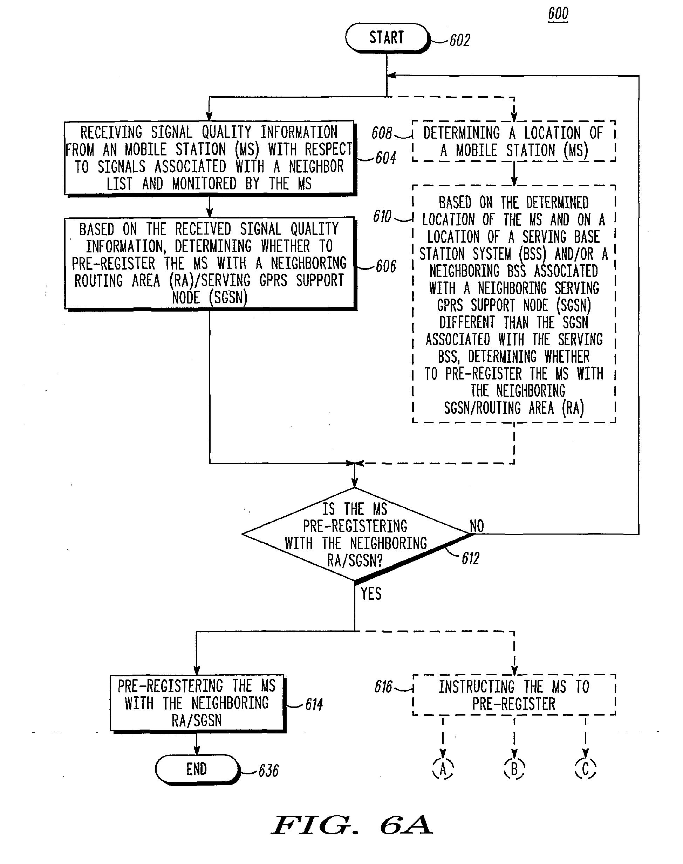

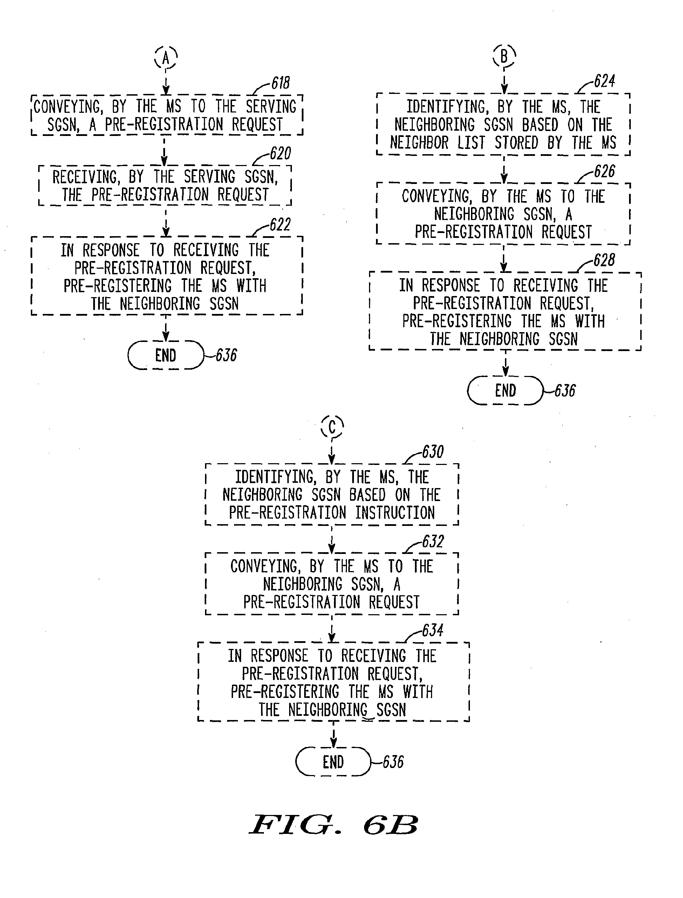

In each of the above embodiments of an MS initiated pre-registration, in addition to obtaining registration information concerning MS 202, neighboring SGSN 250 may also establish (518) communication links with BSS 230 and/or GGSN 260 for transmission of data to and from MS 202 as part of the pre-registration process. In still other embodiments of the present invention, the step of pre-registering (314) MS 202 with RA 208/SGSN 250 may be initiated by infrastructure 270. Referring now to FIGs. 6A and 6B, a logic flow diagram 600 is depicted of an infrastructure-initiated pre-registration in accordance with various embodiments of the present invention. In one embodiment of an infrastructure-initiated pre-registration process, logic flow diagram 600 begins (602) when infrastructure 270 receives (604), from MS 202, signal quality information corresponding to Neighbor List communication channels monitored by the MS. In one such embodiment, similar to the MS-initiated pre-registration embodiment, in response to receiving Neighbor List 216, MS 202 monitors each broadcast channel identified in the Neighbor List. MS 202 determines a signal quality metric, such as a signal strength, a signal-to-noise ratio (SNR), or a bit error rate (BER), with respect to each monitored channel and conveys the signal quality metrics to infrastructure 270 via serving BSS 220.

Based on the received signal quality information, serving BSS 220, and in particular serving controller 224, or serving SGSN 240 then determines (606) whether to pre-register MS 202 with a neighboring RA 208/SGSN 250 associated with a communication channel of Neighbor List 216. In one embodiment of the present invention, wherein infrastructure 270 receives signal quality metrics from MS 202, serving BSS 220 or serving SGSN 240 then compares each received signal quality metric to a pre-registration signal quality metric threshold. In another embodiment of the present invention, MS 202 may perform the comparison and convey the results of the comparison to infrastructure 270. When serving BSS 220 performs the comparison or receives comparison results from MS 202 and a determination of whether to pre-register MS 202 with a neighboring RA/SGSN resides in serving SGSN 240, the serving BSS conveys the comparison results to serving SGSN 240. When a determined signal quality metric compares favorably with the pre-registration signal quality metric threshold and serving BSS 220 or serving SGSN 240, whichever element of communication system 200 is making the pre-registration decision, further determines that the SGSN associated with the monitored signal, such as SGSN 250, is different than the serving SGSN, then the serving BSS or SGSN determines to initiate a pre-registration of MS 202 with such neighbor SGSN.

In another infrastructure-initiated embodiment of the present invention, serving BSS 220, and in particular serving controller 224, or serving SGSN 240 may determine whether to pre-register MS 202 based on a location of the MS. In such an embodiment, logic flow diagram 600 may begin (602) when a location of MS 202 is determined (608). In one such embodiment, MS 202 may self-determine its geographical location and convey the determined geographical location to infrastructure 270. Methods by which an MS may self-determine its geographical location are well-known in the art and will not be described in detail herein. For example, MS 202 may self-determine its geographical location based on location information received from each of multiple BSSs in communication system 200, such as based on a time difference of arrival (TDOA) of pilot signals received from each of the multiple BSSs. By way of another example, MS 202 may further include a Global Positioning System (GPS) receiver (not shown) and may self-determine its geographical location by reference to a constellation of GPS satellites. MS 202 then conveys its determined geographical location, or at least the received location information, to infrastructure 270 via serving BSS 220, which geographical location or location information is routed to SGSN 240 or to controller 224 of BSS 220.

Upon receiving the location information from MS 202, serving SGSN 240 or serving BSS 220 determines a geographical location of the MS based on the geographical location determined by MS 202 or based on the location information received from MS 202 and further retrieves the geographical locations of the BSSs associated with the Neighbor List of MS 202 from a respective at least one memory device 228, 244. When controller 224 determines the locations of MS 202 and/or BSSs 220 and 230, the controller may convey each such location determination to SGSN 240. Based on the determined locations of MS 202 and at least one of BSSs 220 and 230, serving BSS 220 or serving SGSN 240 then determines (610) whether to initiate a pre-registration of MS 202 with SGSN 250.

For example, serving BSS 220 or serving SGSN 240 may determine, based on multiple determinations of a geographical location of MS 202, that MS 202 is headed in a direction toward BSS 230. In response to determining that MS 202 is headed toward BSS 230, BSS 220 or SGSN 240 may determine (612) to initiate a pre-registration of MS 202 with SGSN 250. By way of another example, based on a determined location of MS 202 and BSS 230, BSS 220 or SGSN 240 may determine that MS 202 has moved to within a predetermined distance of BSS 230. In response to determining that MS 202 has moved to within the predetermined distance, BSS 220 or SGSN 240 may determine (612) to initiate a pre-registration of MS 202 with SGSN 250. By way of yet another example, the at least one memory device 228, 244 of BSS 220 or SGSN 240 may maintain a geographical location of a border, for handoff purposes, between a coverage area associated with BSS 220 and a coverage area associated with BSS 230. When BSS 220 or SGSN 240 determines that MS 202 has moved to within a geographical distance of the border, the BSS or SGSN may determine (612) to initiate a pre-registration of MS 202 with RA 208/SGSN 250.

In response to determining to initiate a pre-registration of MS 202 with RA 208/SGSN 250, BSS 220 or SGSN 240 may either instruct (616) the MS to pre-register or may pre-register (614) the MS with SGSN 250. In an embodiment of the present invention wherein serving BSS 220 or serving SGSN 240 pre-registers (614) MS 202 with RA 208/SGSN 250, serving BSS 220 may instruct serving SGSN 240 to pre-register MS 202, or serving SGSN 240 may on its own pre-register MS 202, with neighboring SGSN 250 as is described in detail above. For example, serving SGSN 240 may pre-register MS 202 by conveying to neighboring SGSN 250 at least a portion of the registration information associated with MS 202 and maintained in the at least one memory device 244 of the serving SGSN. Serving SGSN 240 may convey the information via GGSN 260 or may establish a point-to-point communication with SGSN 250 and convey the information via the established point-to-point communication.

In an embodiment of the present invention wherein BSS 220 or SGSN 240 instructs (616) the MS to pre-register, serving BSS 220 or serving SGSN 240 may convey a pre-registration instruction to MS 202 via the broadcast channel or the at least one control channel in forward link 211. The pre-registration instruction instructs MS 202 to pre-register. In one such embodiment, in response receiving the pre-registration instruction, MS 202 conveys (618) to serving SGSN 240 via serving BSS 220, and the serving SGSN receives (620) from the MS, a pre-registration request such as pre-registration request 218. In response to receiving the pre-registration request, serving SGSN 240 then pre-registers (622) MS 202 with neighbor SGSN 250 as described above, for example, by conveying to SGSN 250 registration information stored in the at least one memory device 244 of serving SGSN 240 or by forwarding registration information received by the serving SGSN from MS 202. Logic flow 600 then ends (636).

In another embodiment of the present invention, in response receiving the pre-registration instruction, MS 202 may identify (624) neighboring SGSN 250 or an associated RA 208 based on the Neighbor List maintained in the at least one memory device 204 of the MS and convey (626) a pre-registration request, such as pre-registration request 219, to the neighboring SGSN. In response to receiving the pre-registration request, neighboring SGSN 250 pre-registers (628) MS 202 as described above, for example, by obtaining registration information associated with MS 202 from SGSN 240, by engaging in a registration procedure with MS 202, or by storing registration information that may be included in the received pre-registration request. Logic flow 600 then ends (636).

In still another embodiment, the pre-registration instruction may include an identifier associated with neighboring SGSN 250. In response to receiving the pre-registration instruction, MS 202 identifies (630) neighboring SGSN 250 based on the received instruction and conveys (632) a pre-registration request to the neighboring SGSN. In response to receiving the pre-registration request, SGSN 250 pre-registers (634) MS 202 as described above and logic flow 600 then ends (636).

In each of the above embodiments, as part of the pre-registration of MS 202 with SGSN 250, SGSN 250 may further establish communication links with BSS 230 and/or GGSN 260 for transmission of data to and from MS 202.

By providing for a pre-registration of MS 202 with a neighboring SGSN 250 serving a neighboring RA 208 and a neighboring BSS 230 that are handoff candidates for MS 202, communication system 200 reduces a duration of a registration process and the corresponding service disruptions when the MS is handed off to such an RA and SGSN. In pre-registering in the neighboring RA 208 with SGSN 250, MS 202 at least partially registers with SGSN 250, that is, at least a portion of the MS's registration information is conveyed to the neighboring SGSN prior to the MS being served by an associated neighboring BSS 230, for example, prior to an initiation of a handoff of the MS to the neighboring BSS 230. In various embodiments of the present invention, the at least a portion of the MS's registration information may be conveyed by the serving SGSN 240 to the neighboring SGSN 250 in response to a self-initiated transfer by the serving SGSN or in response to a request received by the serving SGSN from MS 202 or from the neighboring SGSN. In other embodiments of the present invention, the at least a portion of the MS's registration information may be conveyed by MS 202 to neighboring SGSN 250 in response to a self-initiated pre-registration by the MS or in response to an instruction received by the MS from either serving BSS 220 or SGSN 240.

such that a process, method, article, or apparatus that comprises a list of elements does not include only those elements but may include other elements not expressly listed or inherent to such process, method, article, or apparatus. It is further understood that the use of relational terms, if any, such as first and second, top and bottom, and the like are used solely to distinguish one entity or action from another entity or action without necessarily requiring or implying any actual such relationship or order between such entities or actions.

## Claims

1. A method for registering a mobile station (202), wherein the method comprises registering the mobile station (202) with a first Serving GPRS Support Node (240), wherein the first Serving GPRS Support Node (240) services a first Base Station System (220) that provides communication services to the mobile station (202) and wherein the method further comprises:
assembling (306) a Neighbor List (216) that comprises a plurality of communication channels, wherein a communication channel of the plurality of communication channels is associated with a second Base Station System (230) that is serviced by a second Serving GPRS Support Node (250) that is different than the first Serving GPRS Support Node (240) and wherein the Neighbor List informs of a Routing Area RA associated with each communication channel of the plurality of communication channels;
determining (610) the second BSS that is serviced by the second Serving GPRS Support Node (250) and that is different than the first Serving GPRS Support Node (240) based on the Routing Area associated with each communication channel of the plurality of communication channels included in the Neighbor List; and
partially registering (614) the mobile station (202) with the second Serving GPRS Support Node (250) based on the determined second BSS and prior to the establishment of a control channel between the mobile station (202) and the second Base Station System (230).

2. The method of claim 1, wherein partially registering (614) comprises conveying, by at least one of the mobile station (202) and the first Serving GPRS Support Node (240) to the second Serving GPRS Support Node (250), at least a portion of registration information associated with the mobile station (202).

3. The method of claim 1, wherein partially registering (614) the mobile station (202) with the second Serving GPRS Support Node (250) comprises:
receiving registration information from the mobile station (202); and
conveying the received registration information to the second Serving GPRS Support Node (250).

4. The method of claim 1, wherein partially registering (614) comprises:
receiving, by the first Serving GPRS Support Node (240) from at least one of the mobile station (2020, the first Base Station System (220), and the second Serving GPRS Support Node (250), a request to pre-register the mobile station (202) with the second Serving GPRS Support Node (250); and
in response to receiving the request, conveying, by the first Serving GPRS Support Node (240) to the second Serving GPRS Support Node (250), at least a portion of registration information associated with the mobile station (202).

5. The method of claim 4, wherein receiving comprises:
receiving, by the second Serving GPRS Support Node (250) from the mobile station (202), a request to pre-register the mobile station (202) with the second Serving GPRS Support Node (250);
conveying, by the second Serving GPRS Support Node (250) to the first Serving GPRS Support Node (240), a request for at least a portion of registration information associated with the mobile station (202);
receiving, by the first Serving GPRS Support Node (240) from the second Serving GPRS Support Node (250), the request for at least a portion of the registration information; and
wherein conveying comprises, in response to receiving the request from the second Serving GPRS Support Node (250), conveying, by the first Serving GPRS Support Node (240) to the second Serving GPRS Support Node (250), at least a portion of the registration information associated with the mobile station (202).

6. The method of claim 1, wherein each communication channel of the plurality of communication channels is associated with a Base Station System and wherein partially registering comprises:
broadcasting, by each Base Station System associated with a communication channel of the plurality of communication channels, information concerning a Routing Area associated with the Base Station System;
determining the second Base Station System (230) that is serviced by the second Serving GPRS Support Node (250) that is different than the first Serving GPRS Support Node (240) based on the Routing Areas broadcast by each Base Station System associated with a communication channel of the plurality of communication channels; and
partially registering the mobile station (202) with the second Serving GPRS Support Node (250) based on the determined second Base Station System (230) and prior to the mobile station (202) being served by the second Base Station System (230).

7. The method of claim 1, wherein partially registering comprises:
determining at least one of a signal quality metric for the communication channel of the plurality of communication channels that is associated with the second Base Station System (230), a signal quality metric for a communication channel that is associated with the first BSS, and a geographical location of the mobile station (202);
determining to pre-register the mobile station (202) with the second Serving GPRS Support Node (250) based on the determined at least one of the signal quality metric for the communication channel that is associated with the second Base Station System (230), the signal quality metric for the communication channel that is associated with the first Base Station System (220), and the geographical location of the mobile station (202); and
partially registering the mobile station (202) with the second Serving GPRS Support Node (250) prior to the mobile station (202) being served by the second Base Station System (230).

8. An apparatus for pre-registering a mobile station (202), the apparatus comprising a first Serving GPRS Support Node (240) having a processor that is adapted to assemble a Neighbor List corresponding to a mobile station and comprising a plurality of communication channels, wherein the Neighbor List comprises a Routing Area associated with each communication channel of the plurality of communication channels and is adapted to, while currently serving the mobile station (202), partially register the mobile station (202) with a second Serving GPRS Support Node (250) based on the Routing Area associated with each communication channel of the plurality of communication channels included in the Neighbor List and prior to the establishment of a control channel between the mobile station (202) and a Base Station System associated with the second Serving GPRS Support Node (250).

9. The apparatus of claim 8, wherein the processor pre-registers the mobile station (202) by receiving registration information from the mobile station (202) and conveying the received registration information to the second Serving GPRS Support Node (250).

10. The apparatus of claim 8, wherein the processor receives a request to pre-register the mobile station (202) from at least one of the mobile station (202), a Base Station System associated with the first Serving GPRS Support Node (240), and the second Serving GPRS Support Node (250), and in response to receiving the request, pre-registers the mobile station (202) by conveying registration information to the second Serving GPRS Support Node (250).

11. The apparatus of claim 8, wherein the apparatus further comprises a controller associated with a Base Station System serviced by the first Serving GPRS Support Node (240), wherein the controller is in communication with the first Serving GPRS Support Node (240), wherein the controller assembles a Neighbor List corresponding to the mobile station (202) and comprising a plurality of communication channels, and wherein the Neighbor List comprises a Routing Area associated with at least one communication channel of the plurality of communication channels.

12. The apparatus of claim 8, wherein the processor determines to pre-register the mobile station (202) with the second Serving GPRS Support Node (250) based on at least one of a quality of a communication channel associated with a Base Station System that is associated with the first Serving GPRS Support Node (240), a quality of a communication channel associated with the Base Station System that is associated with the second Serving GPRS Support Node (250), and a location of the mobile station (202).

13. The apparatus of claim 8, wherein the apparatus further comprises the second Serving GPRS Support Node (250), wherein the second Serving GPRS Support Node (250) receives registration information associated with the mobile station (202) from the first Serving GPRS Support Node (240) and stores the received registration information in an at least one memory device of the second Serving GPRS Support Node (250) prior to the mobile station (202) communicating with the second Serving GPRS Support Node (250).

14. The apparatus of claim 13, wherein the second Serving GPRS Support Node (250) further establishes a communication link with at least one of a Gateway GPRS Support Node and a Base Station System associated with the second Serving GPRS Support Node (250) prior to the mobile station (202) communicating with the second Serving GPRS Support Node (250).

15. The apparatus of claim 8, wherein the apparatus further comprises the second Serving GPRS Support Node (250) and wherein the second Serving GPRS Support Node (250) conveys a message to the mobile station (202) informing of a Routing Area associated with the second Serving GPRS Support Node (250) and, in response to conveying the message informing of the Routing Area, receives registration information associated with the mobile station (202).

16. A mobile station (202) comprising:
at least one memory device; and
a processor operably coupled to the memory device that is adapted to, when the mobile station (202) is registered with a first Serving GPRS Support Node (240), wherein the first Serving GPRS Support Node (240) services a first Base Station System (220) that provides communication services to the mobile station (202), receive a Neighbor List comprising a plurality of communication channels and a Routing Area associated with each communication channel of the plurality of communication channels, wherein a communication channel of the plurality of communication channels is associated with a second Base Station System (230) that is serviced by a second Serving GPRS Support Node (250) that is different than the first Serving GPRS Support Node (240), is adapted to store the Neighbor List in the at least one memory device, is adapted to determine the second Base Station System (230) based on the Routing Area, and is adapted to initiate a registration of the mobile station (202) by conveying to an infrastructure a request to register the mobile station (202) with the second Serving GPRS Support Node (250) based on the determined second Base Station System (230) and prior to the establishment of a control channel between the mobile station (202) and the second Base Station System (230).

## Patentansprüche

1. Verfahren zum Anmelden einer Mobilstation (202), wobei das Verfahren umfasst: Anmelden der Mobilstation (202), an einem ersten Serving GPRS Support Node (240), wobei der erste Serving GPRS Support Node ein erstes Basisstation-System (220) versorgt, das der Mobilstation (202) Kommunikationsdienste bereitstellt und wobei das Verfahren ferner umfasst:
Zusammenfügen (306) einer Nachbarnliste (216), die eine Mehrzahl von Kommunikationskanälen umfasst, wobei ein Kommunikationskanal der Mehrzahl von Kommunikationskanälen einem zweitem Basisstation-System (230) zugeordnet ist, das von einem zweiten, sich von dem ersten Serving GPRS Support Node (240) unterscheidenden, Serving GPRS Support Node (250) versorgt wird und wobei die Nachbarnliste über einen Routingbereich RA informiert, der jedem Kommunikationskanal der Mehrzahl von Kommunikationskanälen zugeordnet ist;
Bestimmen (610) des zweiten BSS, das von dem zweiten, sich von dem ersten Serving GPRS Support Node (240) unterscheidenden, Serving GPRS Support Node (250) versorgt wird, basierend auf dem Routingbereich, der jedem Kommunikationskanal der Mehrzahl von in der Nachbarnliste beinhaltenden Kommunikationskanälen zugeordnet ist; und
teilweises Anmelden (614) der Mobilstation (202) an dem zweiten Serving GPRS Support Node (250), basierend auf dem bestimmten zweiten BSS und vor dem Aufbau eines Steuerungskanals zwischen der Mobilstation (202) und dem zweiten Basisstation-System (230).

2. Verfahren nach Anspruch 1, wobei das teilweise Anmelden (614) das Übertragen von zumindest einem Teil von Anmeldeinformation, die der Mobilstation (202) zugeordnet ist, durch zumindest eines der Elemente Mobilstation (202) und erster Serving GPRS Support Node (240) umfasst.

3. Verfahren nach Anspruch 1, wobei das teilweise Anmelden (614) der Mobilstation (202) an dem zweiten Serving GPRS Support Node (250) umfasst:
Empfangen von Anmeldeinformation von der Mobilstation (202); und
Übertragen der empfangenen Anmeldeinformation zu dem zweiten Serving GPRS Support Node (250).

4. Verfahren nach Anspruch 1, wobei das teilweise Anmelden (614) umfasst:
Empfangen einer Anfrage zur Voranmeldung der Mobilstation (202) an dem zweiten Serving GPRS Support Node (250), durch den ersten Serving GPRS Support Node (240) von zumindest einem der Elemente Mobilstation (202), erstes Basisstation-System (220) und zweiter Serving GPRS Support Node (250); und
Übertragen von zumindest einem Teil der der Mobilstation (202) zugeordneten Anmeldeinformation durch den ersten Serving GPRS Support Node (240) zu dem zweiten Serving GPRS Support Node (250) als Antwort auf das Empfangen der Anfrage.

5. Verfahren nach Anspruch 4, wobei das Empfangen umfasst:
Empfangen einer Anfrage von der Mobilstation (202) zur Voranmeldung der Mobilstation (202) an dem zweiten Serving GPRS Support Node (250) durch den zweiten Serving GPRS Node (250);
Übertragen einer Anfrage für zumindest einen Teil von Anmeldeinformation, der der Mobilstation (202) zugeordnet ist, durch den zweiten Serving GPRS Support Node (250) zu dem ersten Serving GPRS Support Node (240);
Empfangen der Anfrage für zumindest einen Teil der Anmeldeinformation durch den ersten Serving GPRS Support Node (240) von dem zweiten Serving GPRS Support Node (250); und
wobei das Übertragen Übertragen von zumindest einem Teil der Anmeldeinformation, der der Mobilstation (202) zugeordnet ist als Antwort auf das Empfangen der Anfrage von dem zweiten Serving GPRS Support Node (250), durch den ersten Serving GPRS Support Node (240), zu dem zweiten Serving GPRS Support Node (250) umfasst.

6. Verfahren nach Anspruch 1, wobei jeder Kommunkationskanal der Mehrzahl von Kommunikationskanälen einem Basisstation-System zugeordnet ist, und wobei teilweise Anmelden umfasst:
Rundsenden von Information betreffend eines dem Basisstation-system zugeordneten Routingbereichs durch jedes Basisstation-System, das einem Kommunikationskanal der Mehrzahl von Kommunikationskanälen zugeordnet ist;
Bestimmen des zweiten Basisstation-Systems (230), das durch den zweiten, sich von dem ersten Serving GPRS Support Node (240) unterscheidenden, Serving GPRS Support Node (250) versorgt wird, basierend auf den Routingbereichen, die durch jedes Basisstation-System, das einem Kommunikationskanal der Mehrzahl von Kommunikationskanälen zugeordnet ist, rundgesendet werden; und
teilweises Anmelden der Mobilstation (202) an dem zweiten Serving GPRS Support Node (250), basierend auf dem bestimmten zweiten Basisstation-System (230) und bevor die Mobilstation (202) von dem zweiten Basisstation-System (230) versorgt wird.

7. Verfahren nach Anspruch 1, wobei das teilweise Anmelden umfasst:
Bestimmen von zumindest einem der Elemente Signalqualitätsmetrik für den Kommunikationskanal der Mehrzahl der Kommunikationskanäle, die dem zweiten Basisstation-System (230) zugeordnet ist, Signalqualitätsmetrik für einen Kommunikationskanal, der dem ersten BSS zugeordnet ist, und geographische Lage der Mobilstation (202);
Bestimmen, die Mobilstation (202) an dem zweiten Serving GPRS Support Node (250) voranzumeiden, basierend auf dem bestimmten, zumindest einen der Elemente Signalqualitätsmetrik für den Kommunikationskanal, der dem zweiten Basisstation-System (230) zugeordnet ist, Signalqualitätsmetrik für den Kommunikationskanal, der dem ersten Basisstation-System (220) zugeordnet ist, und geographische Lage der Mobilstation (202); und
teilweises Anmelden der Mobilstation (202) an dem zweiten Serving GPRS Support Node (250), bevor die Mobilstation (202) von dem zweiten Basisstation-System (230) versorgt wird.

8. Vorrichtung zum Voranmelden einer Mobilstation (202), wobei die Vorrichtung umfasst:
einen ersten Serving GPRS Support Node (240), der einen Prozessor hat, der ausgebildet ist, eine Nachbarnliste entsprechend einer Mobilstation und umfassend einer Mehrzahl von Kommunikationskanälen zusammenzufügen, wobei die Nachbarnliste einen Routingbereich umfasst, der jedem Kommunikationskanal der Mehrzahl von Kommunikationskanälen zugeordnet ist, und ausgebildet ist, während sie die Mobilstation (202) aktuell versorgt, die Mobilstation (202), basierend auf dem Routingbereich, der dem Kommunikationskanal der Mehrzahl von in der Nachbarnliste beinhaltenden Kommunikationskanälen zugeordnet ist und vor dem Aufbau eines Steuerungskanals zwischen der Mobilstation (202) und einem Basisstation-System, das den zweiten Serving GPRS Support Node (250) zugeordnet ist, mit einem zweiten Serving GPRS Support Node (250) teilweise anzumelden.

9. Vorrichtung nach Anspruch 8, wobei der Prozessor die Mobilstation (202) durch Empfangen von Anmeldeinformation von der Mobilstation (202) und Übertragen der empfangenen Anmeldeinformationen zu dem zweiten Serving GPRS Support Node (250) voranmeldet.

10. Vorrichtung nach Anspruch 8, wobei der Prozessor eine Anfrage zum Voranmelden der Mobilstation (202) von zumindest einem der Elemente Mobilstation (202), Basisstation-System, das dem ersten Serving GPRS Support Node (240) zugeordnet ist, und zweiter Serving GPRS Support Node (250) empfängt und als Antwort auf das Empfangen der Anfrage die Mobilstation (202) durch das Übertragen der Anmeldeinformationen zu dem zweiten Serving GPRS Support Node (250) voranmeldet.

11. Vorrichtung nach Anspruch 8, wobei die Vorrichtung ferner eine Steuerung umfasst, die einem Basisstation-System zugeordnet ist, das von dem ersten Serving GPRS Support Node (240) versorgt wird, wobei die Steuerung mit dem ersten Serving GPRS Support Node (240) in Verbindung steht, wobei die Steuerung eine Nachbarnliste entsprechend der Mobilstation (202) zusammenfügt, und eine Mehrzahl von Kommunikationskanälen umfasst, und wobei die Nachbarnliste einen Routingbereich umfasst, der zumindest einem Kommunikationskanal der Mehrzahl von Kommunikationskanälen zugeordnet ist.

12. Vorrichtung nach Anspruch 8, wobei der Prozessor das Voranmelden der Mobilstation (202) an dem zweiten Serving GPRS Support Node (250), basierend auf zumindest einem der Elemente Qualität des Kommunikationskanals, der einem dem ersten Serving GPRS Support Node (240) zugeordneten Basisstation-System zugeordnet ist, Qualität eines Kommunikationskanals, der dem dem zweiten Serving GPRS Support Node (250) zugeordneten Basisstation-System zugeordnet ist und Lage der Mobilstation (202) bestimmt.

13. Vorrichtung nach Anspruch 8, wobei die Vorrichtung ferner den zweiten Serving GPRS Support Node (250) umfasst, wobei der zweite Serving GPRS Node (250) Anmeldeinformation von dem ersten Serving GPRS Support Node (240) empfängt, die der Mobilstation (202) zugeordnet ist, und die empfangene Anmeldeinformation in zumindest einer Speichervorrichtung des zweiten Serving GPRS Support Nodes (250) speichert, bevor die Mobilstation (202) mit dem zweiten Serving GPRS Support Node (250) kommuniziert.

14. Vorrichtung nach Anspruch 13, wobei der zweite Serving GPRS Support Node (250) ferner eine Kommunikationsverbindung mit zumindest einem der Elemente Gateway GPRS Support Node und Basisstation-System, das dem zweiten Serving GPRS Support Node (250) zugeordnet ist, aufbaut, bevor die Mobilstation (202) mit dem zweiten Serving GPRS Support Node (250) kommuniziert.

15. Vorrichtung nach Anspruch 8, wobei die Vorrichtung ferner den zweiten Serving GPRS Support Node (250) umfasst und wobei der zweite Serving GPRS Support Node (250) eine Nachricht zu der Mobilstation (202) überträgt, die über einen Routingbereich informiert, der dem zweiten Serving GPRS Support Node (250) zugeordnet ist, und als Antwort auf das Übertragen der Nachricht, die über den Routingbereich informiert, Anmeldeinformation empfängt, die der Mobilstation (202) zuzuordnen sind.

16. Mobilstation (202) umfassend:
zumindest eine Speichervorrichtung; und
einen Prozessor, der betriebsfähig mit der Speichervorrichtung verbunden ist, die ausgebildet ist, eine Nachbarnliste umfassend einer Mehrzahl von Kommunikationskanälen und einem Routingbereich, der jedem Kommunikationskanal der Mehrzahl von Kommunikationskanälen zugeordnet ist, zu empfangen, wenn die Mobilstation (202) an dem ersten Serving GPRS Support Node (240) angemeldet wird, wobei der erste Serving GPRS Support Node (240) ein erstes Basisstation-System (240) versorgt, das der Mobilstation (202) Kommunikationsdienste bereitstellt, wobei ein Kommunikationskanal der Mehrzahl von Kommunikationskanälen einem zweiten Basisstation-System (230) zugeordnet ist, das durch einen zweiten sich von dem ersten Serving GPRS Support Node (240) unterscheidenden, Serving GPRS Support Node (250) versorgt wird, ausgebildet ist, die Nachbarnliste in der zumindest einen Speichervorrichtung zu speichern, ausgebildet ist, das zweite Basisstation-System (230) basierend auf dem Routinggebiet zu bestimmen, und ausgebildet ist, basierend auf dem bestimmten zweiten Basisstation-System (230) und bevor ein Steuerungskanal zwischen der Mobilstation (202) und dem zweiten Basisstation-System (230) aufgebaut wurde, ein Anmelden der Mobilstation (202) durch Übertragen einer Anfrage zum Anmelden der Mobilstation (202) an dem zweiten Serving GPRS Support Node (250) zu einer Infrastruktur einzuleiten.

## Revendications

1. Un procédé pour enregistrer une station mobile (202), dans lequel le procédé comprend enregistrer la station mobile (202) à un premier noeud de support de service GPRS de desserte (240), dans lequel le premier noeud de support de service GPRS de desserte (240) dessert un premier système station de base (220) qui fournit des services de communication à la station mobile (202) et dans lequel le procédé comprend en outre :
assembler (306) une liste de voisins (216) qui comprend une pluralité de voies de communication, dans lequel une voie de communication parmi la pluralité de voies de communication est associée à un deuxième système station de base (230) qui est desservi par un deuxième noeud de support de service GPRS de desserte (250) qui est différent du premier noeud de support de service GPRS de desserte (240) et dans lequel la liste des voisins informe d'une zone d'acheminement RA associée à chaque voie de communication parmi la pluralité de voies de communication ;
déterminer (610) le deuxième système station de base qui est desservi par le deuxième noeud de support de service GPRS de desserte (250) et qui est différent du premier noeud de support de service GPRS de desserte (240) à base de la zone d'acheminement associée à chaque voie de communication parmi la pluralité de voies de communication incluse dans la liste de voisins ; et
partiellement enregistrer (614) la station mobile (202) au deuxième noeud de support de service GPRS de desserte (250) à base du deuxième système station de base déterminé et en avance de l'établissement d'une voie de contrôle entre la station mobile (202) et le deuxième système station de base (230).

2. Le procédé selon la revendication 1, dans lequel enregistrer partiellement (614) comprend transmettre, par au moins un d'entre la station mobile (202) et le premier noeud de support de service GPRS de desserte (240), au deuxième noeud de support de service GPRS de desserte (250), au moins une partie de l'information d'enregistrement associée à la station mobile (202).

3. Le procédé selon la revendication 1, dans lequel enregistrer partiellement (614) la station mobile (202) au deuxième noeud de support de service GPRS de desserte (250) comprend :
recevoir de l'information d'enregistrement de la station mobile (202) ; et
transmettre l'information d'enregistrement reçue au deuxième noeud de service GPRS de desserte (250).

4. Le procédé selon la revendication 1, dans lequel enregistrer partiellement (614) comprend :
recevoir, par le premier noeud de support de service GPRS de desserte (240) depuis au moins un d'entre la station mobile (202), le premier système station de base, et le deuxième noeud de support de service GPRS de desserte (250), une requête de préenregistrer la station mobile (202) au deuxième noeud de support de service GPRS de desserte (250) ; et
en réponse à recevoir la requête, transmettre, par le premier noeud de support de service GPRS de desserte (240) au deuxième noeud de support de service GPRS de desserte (250), au moins une partie d'information d'enregistrement associée à la station mobile (202).

5. Le procédé selon la revendication 4, dans lequel recevoir comprend :
recevoir, par le deuxième noeud de support de service GPRS de desserte (250) depuis la station mobile (202), une requête de préenregistrer la station mobile (202) au deuxième noeud de support de service GPRS de desserte (250) ;
transmettre, par le deuxième noeud de support de service GPRS de desserte (250) au premier noeud de support de service GPRS de desserte (240), une requête pour au moins une partie d'information d'enregistrement associée à la station mobile (202) ;
recevoir, par le premier noeud de support de service GPRS de desserte (240) du deuxième noeud de support de service GPRS de desserte (250), la requête pour au moins une partie de l'information d'enregistrement ; et
dans lequel transmettre comprend, en réponse à recevoir la requête depuis le deuxième noeud de support de service GPRS de desserte (250), transmettre, par le premier noeud de support de service GPRS de desserte (240) au deuxième noeud de support de service GPRS de desserte (250), au moins une partie de l'information d'enregistrement associée avec la station mobile (202).

6. Le procédé selon la revendication 1, dans lequel chaque voie de communication parmi la pluralité de voies de communication est associée avec un système station de base et dans lequel enregistrer partiellement comprend :
diffuser, par chaque système station de base associé à une voie de communication parmi la pluralité de voies de communication, de l'information concernant une zone d'acheminement associée avec le système station de base ;
déterminer le deuxième système station de base (230) qui est desservi par le deuxième noeud de support de service GPRS de desserte (250) qui est différent du premier noeud de support de service GPRS de desserte (240) à base des zones d'acheminement diffusées par chaque système station de base associé à une voie de communication parmi la pluralité de voies de communication ; et
enregistrer partiellement la station mobile (202) au deuxième noeud de support de service GPRS de desserte (250) à base du deuxième système station de base (230) déterminé et avant que la station mobile (202) ne soit desservie par le deuxième système station de base (230).

7. Le procédé selon la revendication 1, dans lequel enregistrer partiellement comprend :
déterminer au moins un d'entre une mesure de qualité du signal de la voie de communication parmi la pluralité de voies de communication qui est associée au deuxième système station de base (230), une mesure de qualité du signal pour une voie de communication qui est associée au premier système station de base, et une position géographique de la station mobile (202) ;
déterminer de préenregistrer la station mobile (202) au deuxième noeud de support de service GPRS de desserte (250) à base de l'au moins un déterminé d'entre une mesure de qualité du signal pour la voie de communication qui est associée au deuxième système station de base (230), la mesure de qualité du signal pour la voie de communication qui est associée au premier système station de base (220), et la position géographique de la station mobile (202) ; et
enregistrer partiellement la station mobile (202) au deuxième noeud de support de service GPRS de desserte (250) avant que la station mobile (202) ne soit desservie par le deuxième système station de base (230).

8. Un dispositif pour préenregistrer une station mobile (202), le dispositif comprenant un premier noeud de support de service GPRS de desserte (240) ayant un processeur qui est adapté pour assembler une liste de voisins correspondant à une station mobile et comprenant une pluralité de voies de communication, dans lequel la liste des voisins comprend une zone d'acheminement associée à chaque voie de communication parmi la pluralité de voies de communication et est adapté pour, en actuellement desservant la station mobile (202), enregistrer partiellement la station mobile (202) à un deuxième noeud de support de service GPRS de desserte (250) à base de la zone d'acheminement associée à chacune des voies de communication parmi la pluralité de voies de communication incluse dans la liste de voisins et avant qu'une voie de contrôle ne soit établie entre la station mobile (202) et un système station de base associé au deuxième noeud de support de service GPRS de desserte (250).

9. Le dispositif selon la revendication 8, dan lequel le processeur préenregistre la station mobile (202) en recevant de l'information d'enregistrement depuis la station mobile (202) et en transmettant l'information d'enregistrement reçue au deuxième noeud de support de service GPRS de desserte (250).

10. Le dispositif selon la revendication 8, dans lequel le processeur reçoit une requête de préenregistrer la station mobile (202) depuis au moins un d'entre la station mobile (202), un système station de base associé au premier noeud de support de service GPRS de desserte (240), et le deuxième noeud de support de service GPRS de desserte (250), et en réponse à recevoir le requête, préenregistre la station mobile (202) en transmettant de l'information d'enregistrement au deuxième noeud de support de service GPRS de desserte (250).

11. Le dispositif selon la revendication 8, dans lequel le dispositif comprend en outre un contrôleur associé à un système station de base desservi par le premier noeud de support de service GPRS de desserte, dans lequel le contrôleur est en communication avec le premier noeud de support de service GPRS de desserte (240), dans lequel le contrôleur assemble une liste de voisins correspondant à la station mobile (202) et comprenant une pluralité de voies de communication, et dans lequel la liste de voisins comprend une zone d'acheminement associée avec au moins une voie de communication parmi la pluralité de voies de communication.

12. Le dispositif selon la revendication 8, dans lequel le processeur détermine de préenregistrer la station mobile (202) au deuxième noeud de support de service GPRS de desserte (250) à base d'au moins un d'entre une qualité d'une voie de communication associée à un système station de base qui est associé au premier noeud de support de service GPRS de desserte (240), une qualité d'une voie de communication associée au système station de base qui est associé au deuxième noeud de support de service GPRS de desserte (250), et une position de la station mobile (202).

13. Le dispositif selon la revendication 8, dans lequel le dispositif comprend en outre le deuxième noeud de support de service GPRS de desserte (250), dans lequel le deuxième noeud de support de service GPRS de desserte (250) reçoit de l'information d'enregistrement associée à la station mobile (202) depuis le premier noeud de support de service GPRS de desserte (240) et stocke l'information d'enregistrement reçue dans au moins un dispositif de mémoire du deuxième noeud de support de service GPRS de desserte (250) avant que la station mobile (202) ne communique avec le deuxième noeud de support de service GPRS de desserte (250).

14. Le dispositif selon la revendication 13, dans lequel le deuxième noeud de support de service GPRS de desserte (250) établit en outre un lien de communication avec au moins un d'entre un noeud de support de service GPRS de transit et un système station de base associé au deuxième noeud de support de service GPRS de desserte (250) avant que la station mobile (202) ne communique avec le deuxième noeud de support de service GPRS de desserte (250).

15. Le dispositif selon la revendication 8, dans lequel le dispositif comprend en outre le deuxième noeud de support de service GPRS de desserte (250) et dans lequel le deuxième noeud de support de service GPRS de desserte (250) transmet un message à la station mobile (202) informant d'une zone d'acheminement associée au deuxième noeud de support de service GPRS de desserte (250) et, en réponse à transmettre le message informant de la zone d'acheminement, reçoit de l'information d'enregistrement associée à la station mobile (202).

16. Une station mobile (202) comprenant :
au moins un dispositif de mémoire ; et
un processeur accouplé de façon opérative au dispositif de mémoire qui est adapté à, quand la station mobile (202) est enregistrée à un premier noeud de support de service GPRS de desserte (240), dans lequel le premier noeud de support de service GPRS de desserte (240) desservit un premier système station de base (220) qui fournit des services de communication à la station mobile (202), recevoir une liste de voisins comprenant une pluralité de voies de communication et une zone d'acheminement associée à chaque voie de communication parmi la pluralité de voies de communication, dans lequel une voie de communication parmi la pluralité de voies de communication est associée avec un deuxième système station de base (230) qui est desservi par un deuxième noeud de support de service GPRS de desserte (250) qui est différent du premier noeud de support de service GPRS de desserte (240), est adapté à stocker la liste de voisins dans l'au moins un dispositif de mémoire, est adapté à déterminer le deuxième système station de base (230) à base de la zone d'acheminement, et est adapté pour initier un enregistrement de la station mobile (202) en transmettant à une infrastructure une requête pour enregistrer la station mobile (202) au deuxième noeud de support de service GPRS de desserte (250) à base du deuxième système station de base (230) déterminé et avant l'établissement d'une voie de contrôle entre la station mobile (202) et le deuxième système station de base (230).
